# EUROPÄISCHE PATENTSCHRIFT

(11) **EP 1 216 736 B1**
(45) Veröffentlichungstag und Bekanntmachung des Hinweises auf die Patenterteilung: **14.07.2004**
(21) Anmeldenummer: 01123523.1
(22) Anmeldetag: 29.09.2001
(51) Int. Cl.: B01D 21/24, F04D 15/02

(54) **Vorrichtung und Verfahren zur Rückförderung von flüssigen Medien durch parallel betriebenen Pumpen**
Apparatus and process for recirculating liquids using pumps mounted in parallel
Dispositif et procédé pour la recirculation de liquides utilisant des pompes montées en parallèle

(30) Priorität: 21.12.2000 DE 10063797
(43) Veröffentlichungstag der Anmeldung: 26.06.2002
(73) Patentinhaber: Mann + Hummel GmbH, 71638 Ludwigsburg (DE)
(72) Erfinder: Reynders, Luc, 3770 Riemst (BE); Leesen, Rene, 3770 Riemst (BE)
(74) Vertreter: Voth, Gerhard, Dipl.-Ing.

(56) Entgegenhaltungen:
- EP-A- 0 775 827
- DE-A- 4 430 959
- US-A- 4 437 811
- US-A- 4 652 802
- US-A- 5 742 500

## Beschreibung

Die Erfindung betrifft eine Vorrichtung zur Rückförderung von flüssigen Medien nach dem Oberbegriff des Patentanspruches 1. Außerdem bezieht sich die Erfindung auf ein Verfahren zum Betreiben der o.g. Vorrichtung.

Es ist aus der DE 44 30 959 eine Vorrichtung zum Entsorgen von flüssigen Medien, wie Kühl-Schmier-Flüssigkeiten mit Produktionsrückständen, wie Spänen aus industriellen Prozessen bekannt. Die flüssigen Medien werden über Rohrleitungen einem über Bodenniveau angeordneten Rückförderbehälter zugeführt, wobei die die Einleitstelle im oberen Bereich des Rückförderbehälters angeordnet ist. Zur Förderung des flüssigen Mediums ist ein Evakuiergerät im oberen Bereich des druckfest ausgeführten Rückförderbehälters angeschlossen. Das Evakuiergerät erzeugt in dem Rückförderbehälter einen negativen Überdruck, wodurch das flüssige Medium aus der Rohrleitung eingesaugt wird. Am Bodenbereich des Rückförderbehälters sind mindestens zwei parallel verlaufende Leitungen angeordnet, durch welche das flüssige Medium von dem Rückförderbehälter in einen Sammeltank gefördert wird. Um den hierzu erforderlichen Förderdruck aufzubringen, ist in jeder Leitung eine Rückförderpumpe vorgesehen. In dem Rückförderbehälter sind Einrichtungen zur Erfassung verschiedener Flüssigkeitsstände angeordnet.

Bei dieser Ausführung werden die Rückförderpumpen jedoch häufig an bzw. abgeschaltet, wodurch die Lebensdauer dieser Rückförderpumpen sehr gering ist. Durch die Reparatur der Rückförderpumpen kommt es bei der beschriebenen Vorrichtung häufig zu Stillstandzeiten, welche teilweise die Produktion negativ beeinflussen. Desweiteren entstehen durch die Reparaturen hohe Unterhaltskosten.

Aufgabe der Erfindung ist es, eine Vorrichtung zur Rückförderung von flüssigen Medien zu schaffen, welche die oben genannten Nachteile vermeidet. Diese Aufgabe wird durch die Merkmale des Patentanspruches 1 gelöst.

### Vorteile der Erfindung

Die erfindungsgemäße Vorrichtung zur Rückförderung von flüssigen Medien weist einen Rückförderbehälter mit einer Zuleitung auf. Die Zuleitung verbindet den Rückförderbehälter mit einer Flüssigkeitsquelle, in welcher das flüssige Medium z.B. als Kühl- und/oder Schmiermittel zur Bearbeitung von Werkstücken genutzt wird. In der Zuleitung können diverse Komponenten, wie z.B. Pumpen zum Fördern der flüssigen Medien, Häcksler zum Zerkleinern von Verunreinigungen oder Messgeräte zur Erfassung der Beschaffenheit der flüssigen Medien, wie z.B. Temperatur, chemische Zusammensetzung, Verschmutzungsgrad, angeordnet sein. Hierbei können Flüssigkeitsquellen z.B. Fräs- oder Drehmaschinen sein. Andere Flüssigkeitsquellen wie z.B. Sammeltanks für flüssige Medien können selbstverständlich ebenfalls mit dem Rückförderbehälter verbunden sein.

An den Rückförderbehälter sind mindestens zwei , insbesondere parallel zueinander verlaufende Ableitungen angeschlossen, welche einerseits korrespondierend mit dem Rückförderbehälter und andererseits mit einem Sammler verbunden sind. Die einzelnen Ableitungen können über einen eigenen Anschluss direkt mit dem Rückförderbehälter verbunden sein. Es ist aber auch möglich, dass zwei oder mehr Ableitungen über einen gemeinsamen Anschluss mit dem Rückförderbehälter verbunden sind. Zwischen den Ableitungen und dem Rückförderbehälter können Bauteile, wie z.B. ein Ventil, eingebracht sein. In jeder Ableitung ist eine Rückförderpumpe angeordnet. Diese Rückförderpumpe bewirkt den Transport des flüssigen Mediums von dem Rückförderbehälter durch die Ableitung in den Sammler. Der Sammler kann sowohl als Behälter, als auch als Leitungssystem ausgebildet sein, welches Verbraucher mit dem flüssigen Medium versorgen. Für den Transport des Mediums ist bei maximaler Menge immer eine Pumpe nicht eingeschaltet. Für den Transport des Mediums ist bei maximaler Menge immer eine Pumpe nicht eingeschaltet.

In dem Rückförderbehälter sind Mittel zur Erfassung eines Flüssigkeitspegels vorgesehen. Diese Mittel zur Erfassung des Flüssigkeitspegels können z.B. Schwimmer oder elektronische Sensoren sein, welche den Füllstand des Rückförderbehälters erfassen. Bei Schwimmerausführungen kann ein einziger Schwimmer vorgesehen sein, welcher den Füllstand an verschiedenen Messpunkten meldet. Hierzu sind dann ortsfeste Sensoren vorgesehen, welche erkennen, wenn der Schwimmer das entsprechende Niveau erreicht hat. Es sind mindestens drei Messstellen vorgesehen, welche den Flüssigkeitspegel erfassen und diesen an eine Elektronik weiterleiten. Das erste Mittel zur Erfassung des Flüssigkeitspegels erfasst einen Mindeststand. Dieser Mindeststand ist derart definiert, dass ab diesem Flüssigkeitspegel eine erste Rückförderpumpe betätigt wird, welche das flüssige Medium aus dem Rückförderbehälter durch die Ableitung in den Sammler pumpt. Das zweite Mittel zur Erfassung des Flüssigkeitspegels dient der Erfassung eines Mittelstandes, welcher zwischen dem Mindeststand und einem Maximalstand auf einer beliebigen Höhe angeordnet ist. Bei besonderen Ausführungen ist der Mittelstand etwa mittig zwischen dem Mindeststand und dem Maximalstand angeordnet. Wenn das flüssige Medium den Mittelstand erreicht hat, wird zu der ersten Rückförderpumpe eine zweite Rückförderpumpe hinzugeschaltet. Das dritte Mittel zur Erfassung des Flüssigkeitsstandes ist an dem Maximalstand angeordnet. Dieser Maximalstand definiert einen Flüssigkeitspegel, ab welchem eine dritte Rückförderpumpe zugeschaltet wird. Dieser Maximalstand wird in Normalbetrieb nicht erreicht da zwei Rückförderpumpen für die maximale Menge sicher ausreichen.

Um die erfassten Flüssigkeitsstände zur Schaltung der Rückförderpumpen zu nutzen, sind die Mittel zur Erfassung der Flüssigkeitsstände mit der Elektronik korrespondierend verbunden. Hierbei können die Signale der Mittel zur Erfassung der Flüssigkeitsstände direkt oder über ein weiteres Bauteil, wie z.B. einen Verstärker, an die Elektronik gesendet werden. Die Elektronik verfügt über eine Verbindung zu den Rückförderpumpen, welche ebenfalls direkt oder indirekt über weitere Bauteile erfolgen kann. Zur Steuerung der Rückförderpumpen ist in der Elektronik eine Logik gespeichert, durch welche die Einschaltfrequenz der Rückförderpumpen (19) reduzierbar ist. Selbstverständlich kann die Elektronik auch zur Regelung der Rückförderpumpen genutzt werden.

Gemäß einer weiteren Ausgestaltung der Erfindung weist die erfindungsgemäße Vorrichtung zur Rückförderung von flüssigen Medien druckseitig einen automatisch gesteuerten Kugelhahn auf. Dieser Kugelhahn wird beim Ein- bzw. Abschalten der zugehörigen Rückförderpumpe geöffnet bzw. geschlossen. Bei geschlossenem Kugelhahn wird ein Rückströmen des bereits geförderten Mediums verhindert. Somit gewährleistet ein Kugelhahn die Funktion des Systems. Gegenüber einer Rückschlagklappe arbeitet ein Kugelhahn zuverlässiger.

Es ist vorteilhaft, dass der Rückförderbehälter druckfest ausgebildet ist, wodurch sowohl ein positiver, als auch ein negativer Überdruck keine Fehlfunktion der Vorrichtung zur Rückförderung verursacht.

Gemäß einer weiteren Ausgestaltung der Erfindung, ist eine Absaugvorrichtung in dem oberen Bereich des Rückförderbehälters angeordnet. Diese Absaugvorrichtung dient dazu, das rückzufördernde flüssige Medium anzusaugen, wodurch ein direkter Kontakt des flüssigen Mediums zu der Absaugvorrichtung verhindert wird. Somit können Verunreinigungen in dem flüssigen Medium keine Beschädigung an der Absaugvorrichtung verursachen, wie dies bei herkömmlichen Pumpen zur Förderung von Fluiden möglich ist.

Es ist vorteilhaft, dass die Zuleitung mit dem Rückförderbehälter in einem oberen Bereich verbunden ist, wodurch das bereits in den Rückförderbehälter eingesaugte oder eingepumpte flüssige Medium nicht wieder zurück in die Zuleitung strömen kann und emeut gefördert werden muss.

Gemäß einer Weiterbildung der Erfindung ist ein weiteres Mittel zur Erfassung des Flüssigkeitsstandes im oberen Bereich des Rückförderbehälters angeordnet, durch welches ein maximaler Füllstand erfassbar ist. Dieser maximale Füllstand definiert einen Flüssigkeitspegel, welcher nicht überschritten werden darf. Beim Überschreiten dieses maximalen Flüssigkeitsstandes ist die Funktion des Rückförderbehälters bzw. der ganzen Vorrichtung nicht mehr gewährleistet. Sobald der Flüssigkeitspegel diesen maximalen Füllstand erreicht hat, wird die Zufuhr des flüssigen Mediums in den Rückförderbehälter unterbrochen, bis der Flüssigkeitsstand wieder unter diesen maximalen Füllstand abgesunken ist. Um kein flüssiges Medium mehr in den Rückförderbehälter zu fördern, kann z.B. die Absaugleitung mit einem Ventil unterbrochen werden. Bei besonderen Ausführungen kann beim Erreichen des maximalen Füllstandes ein Alarmsignal ausgegeben werden, welches z.B. an einem Kontrollpult oder direkt an der Vorrichtung ausgegeben wird.

Eine weitere Ausführung der Erfindung sieht vor, dass ein weiteres Mittel zur Erfassung des Flüssigkeitsstandes im unteren Bereich des Rückförderbehälters angeordnet ist, durch welches ein minimaler Füllstand erfassbar ist. Der minimale Füllstand ist unterhalb des Mindeststandes angeordnet, die Rückförderpumpen schalten ab, sobald der minimale Füllstand erreicht ist. Somit wird ein Trockenlauf der Rückförderpumpe verhindert. Bei einer weiteren Ausgestaltung kann entsprechend dem maximalen Füllstand ein Alarmsignal ausgesendet werden, wenn der minimale Füllstand erreicht wird.

Das Verfahren zum Betreiben einer Vorrichtung zur Rückförderung von flüssigen Medien der beschriebenen Art, weist eine Elektronik auf, welche die Rückförderpumpen mit einer minimalen Einschaltfrequenz betreiben. Sobald der Flüssigkeitsspiegel den Mindeststand überschritten hat, wird die erste Rückförderpumpe eingeschaltet. Diese erste Rückförderpumpe ist die am längsten abgeschaltete Rückförderpumpe. Bei einem weiteren Ansteigen des Flüssigkeitsspiegels über einen weiteren Messpunkt, wie z.B. den Mittelstand, wird eine weitere Rückförderpumpe hinzugeschaltet. Diese hinzugeschaltete Rückförderpumpe die am längsten abgeschaltete Rückförderpumpe der nicht arbeitenden Rückförderpumpen.

Bei einem absinkenden Flüssigkeitspegel unter einen der Messpunkte z.B. des Mittelstandes, wird eine Rückförderpumpe abgeschaltet. Die abgeschaltete Rückförderpumpe ist die am längsten laufende Rückförderpumpe.

Zum Einschalten einer Rückförderpumpe kann ein höher angeordneter Messpunkt erforderlich sein, als zum Abschalten. Dadurch können alle eingeschalteten Rückförderpumpen auch beim Unterschreiten des Einschaltniveaus weiterlaufen. Erst beim Unterschreiten eines tiefer als das Einschaltniveau angeordneten Ausschaltniveaus wird eine der Rückförderpumpen abgeschaltet.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: eine schematische Darstellung einer Vorrichtung zur Rückförderung von flüssigen Medien und
- Figur 2: einen Verlauf von zwei Flüssigkeitspegel.

### Beschreibung der Ausführungsbeispiele

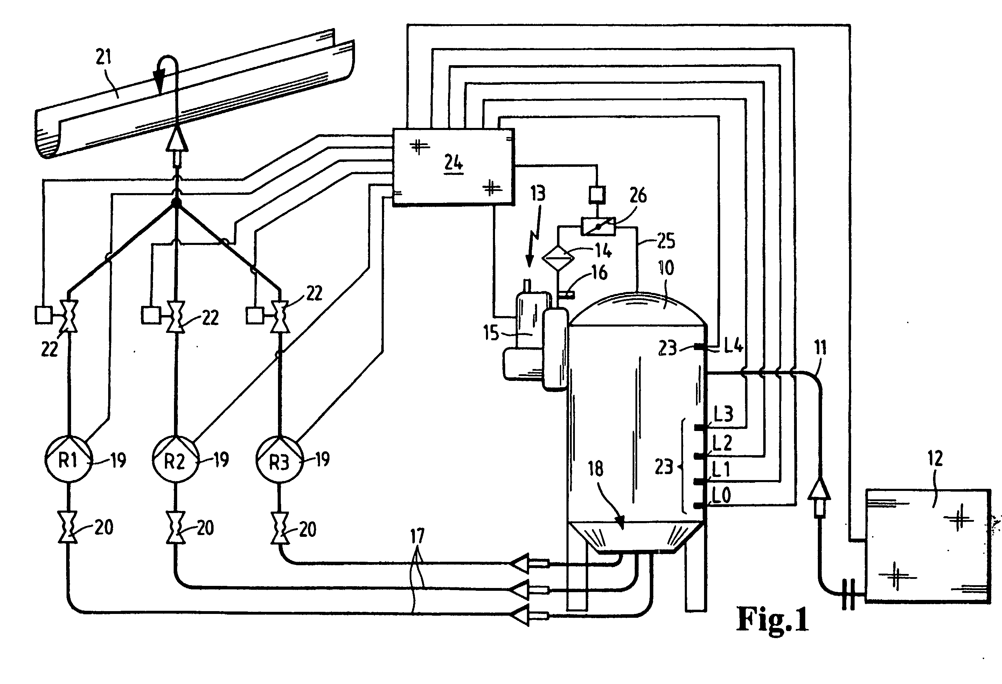

In Figur 1 ist eine Vorrichtung zur Rückförderung von flüssigen Medien schematisch dargestellt. Diese Vorrichtung weist einen druckfest ausgeführten Rückförderbehälter 10 auf, in welchen eine Zuleitung 11 im oberen Bereich einmündet. Die Zuleitung 11 ist mit ihrem anderen Ende mit einer Flüssigkeitsquelle 12 verbunden, welche auf dem selben Niveau wie der Rückförderbehälter 10 angeordnet ist. Diese Flüssigkeitsquelle 12 kann bei anderen Ausführungen jedoch auch oberhalb oder unterhalb des Rückförderbehälters 10 angeordnet sein. Diese Flüssigkeitsquelle 12 ist bei diesem Ausführungsbeispiel ein Sammeltank, in welchem das flüssige Medium zwischengespeichert wird, bis es wieder benötigt wird. Weiterhin ist im oberen Bereich des Rückförderbehälters 10 eine Absaugeinrichtung 13 angeordnet. Diese Absaugeinrichtung 13 weist einen Filter 14, eine Antriebseinheit 15 und ein Druckbegrenzungsventil 16 auf. Die Antriebseinheit 15 wird durch ein Gebläse gebildet, welches in dem Rückförderbehälter 10 einen negativen Überdruck erzeugen kann. Der Filter 14 dient der Reinigung des angesaugten Gases, wodurch die Antriebseinheit 15 geschützt ist. Das Druckbegrenzungsventil 16 verhindert, dass der von der Antriebseinheit 15 erzeugte negative Überdruck zu groß wird und dadurch den Rückförderbehälter 10 bzw. die Funktion der ganzen Vorrichtung beeinträchtigt. An den Rückförderbehälter 10 schließen im Bodenbereich 18 drei Ableitungen 17 an. Der Bodenbereich 18 beschränkt sich nicht nur auf den Bereich unterhalb des Rückförderbehälters 10, er umfasst auch seitliche Teile des Rückförderbehälters 10, welche bodennah angeordnet sind. In den Ableitungen 17 ist jeweils eine Rückförderpumpe 19 angeordnet. Die einzelnen Rückförderpumpen 19 sind identisch ausgeführt, sie verfügen alle über die selbe Förderleistung. Zur Unterscheidung der einzelnen Rückförderpumpen 19 voneinander sind sie mit den Bezeichnungen R1, R2 und R3 versehen. Zwischen den Rückförderpumpen 19 und dem Rückförderbehälter 10 sind Ventile 20 angeordnet, welche von Hand verschließbar ausgeführt sind, so dass Wartungsarbeiten an den Rückförderpumpen durchgeführt werden können. Die Ableitungen 17 münden in einen gemeinsamen Sammler 21, welcher als Rinne ausgeführt ist und das rückgeförderte flüssige Medium wieder einem oder mehreren Verbraucher/n zuführt, wodurch der Kreislauf des flüssigen Mediums geschlossen wird. Zwischen dem Sammler 21 und den Rückförderpumpen 19 ist in jeder Ableitung 17 ein Rückschlagventil 22, angeordnet, welches als automatischer Kugelhahn ausgeführt ist.

In dem Rückförderbehälter 10 sind fünf Sensoren 23 angeordnet, welche zur Erkennung unterschiedlicher Flüssigkeitspegel auf verschiedenen Höhen angeordnet sind. Der erste Sensor L0 ist an einer Stelle angeordnet, welche den minimalen Füllstand definiert. Dieser darf nicht unterschritten werden, da sonst die Rückförderpumpen nicht ordnungsgemäß arbeiten. Der zweite Sensor L1 ist an einer Stelle angeordnet, welche einen Füllstand definiert, ab welchem eine Rückförderpumpe 19 arbeiten muss. Sobald der Flüssigkeitspegel den zweiten Sensor L1 erreicht, wird eine erste Rückförderpumpe 19 in Betrieb gesetzt. Der dritte Sensor L2 definiert eine Stelle, ab welcher eine zweite Rückförderpumpe 19 hinzugeschaltet wird, um das flüssige Medium aus dem Rückförderbehälter 10 heraus zu pumpen. Der vierte Sensor L3 definiert eine Stelle, ab welcher notfalls eine dritte Rückförderpumpe 19 zu den beiden anderen Rückförderpumpen 19 hinzugeschaltet werden muss.

Der fünfte Sensor L4 definiert eine Stelle, bis zu welcher der Flüssigkeitspegel ansteigen darf und die Funktion der Vorrichtung gewährleistet ist. Sobald dieser Sensor L4 von dem Flüssigkeitspegel überschritten ist, kann eine Beschädigung oder Fehlfunktion der Vorrichtung nicht ausgeschlossen werden. Alle Sensoren 23 sind mit einer Elektronik 24 verbunden. Diese Elektronik 24 ist an einer beliebige Stelle angeordnet, wobei eine Anordnung an dem Rückförderbehälter 10 eine besondere Ausführung darstellt. In der Elektronik 24 werden die Signale der Sensoren 23 ausgewertet. Mittels einer in der Elektronik 24 gespeicherten Logik werden die Rückförderpumpen 19, welche ebenfalls mit der Elektronik 24 verbunden sind angesteuert.

Die Antriebseinheit 15, welche z.B. ein Evakuiergerät ist, ist über eine Absaugleitung 25 mit dem Rückförderbehälter 10 verbunden. In dieser Absaugleitung 25 ist ein Steuerventil 26 angeordnet, welches mit der Elektronik 24 verbunden ist.

Sobald in der Flüssigkeitsquelle 12 eine ausreichende Menge an flüssigem Medium enthalten ist, wird die Absaugeinrichtung 13 betätigt, wodurch das flüssige Medium durch die Zuleitung 11 in den Rückförderbehälter 10 gesaugt wird. In dem Rückförderbehälter 10 steigt der Flüssigkeitspegel an, sobald er den Sensor L1 überschritten hat, wird eine erste Rückförderpumpe 19 z.B. R1 eingeschaltet, welche das flüssige Medium aus dem Rückförderbehälter 10 durch die Ableitung 17 in den Sammler 21 pumpt. Wenn trotz der laufenden Rückförderpumpe R1 der Flüssigkeitspegel weiter ansteigt und den Sensor L2 erreicht, wird eine zweite Rückförderpumpe 19 z.B.R2 eingeschaltet. Somit fördern zwei Rückförderpumpen 19 das flüssige Medium aus dem Rückförderbehälter 10 in den Sammler 21. Sofern der Flüssigkeitspegel über den Sensor L3 ansteigt wird die dritte Rückförderpumpe 19 hinzugeschaltet. Wenn alle drei Rückförderpumpen 19 nicht ausreichen, um den Flüssigkeitspegel unterhalb des Sensors L4 zu halten oder in der Flüssigkeitsquelle nicht mehr ausreichend flüssiges Medium vorhanden ist, wird die Absaugeinrichtung 13 abgeschaltet, wodurch kein flüssiges Medium mehr in den Rückförderbehälter 10 eingeleitet wird. Wenn der Flüssigkeitspegel unter den Sensor L4 absinkt kann die Absaugeinrichtung 13 wieder eingeschaltet werden, sofern in der Flüssigkeitsquelle ausreichend flüssiges Medium vorhanden ist.

Sobald der Flüssigkeitspegel von einem Niveau oberhalb des Sensors L3 unter den Sensor L3 absinkt, wird eine Rückförderpumpe 19 abgeschaltet, wodurch nur noch zwei Rückförderpumpen 19 in Betrieb sind. Sinkt der Flüssigkeitspegel unter den Sensor L2, so wird eine zweite Rückförderpumpe 19 abgeschaltet, wodurch nur noch eine Rückförderpumpe in Betrieb ist. Sinkt der Flüssigkeitspegel, weil kein flüssiges Medium in den Rückförderbehälter 10 eingeleitet wird, unter den Sensor L1, so wird auch die einzig laufende Rückförderpumpe 19 abgeschaltet.

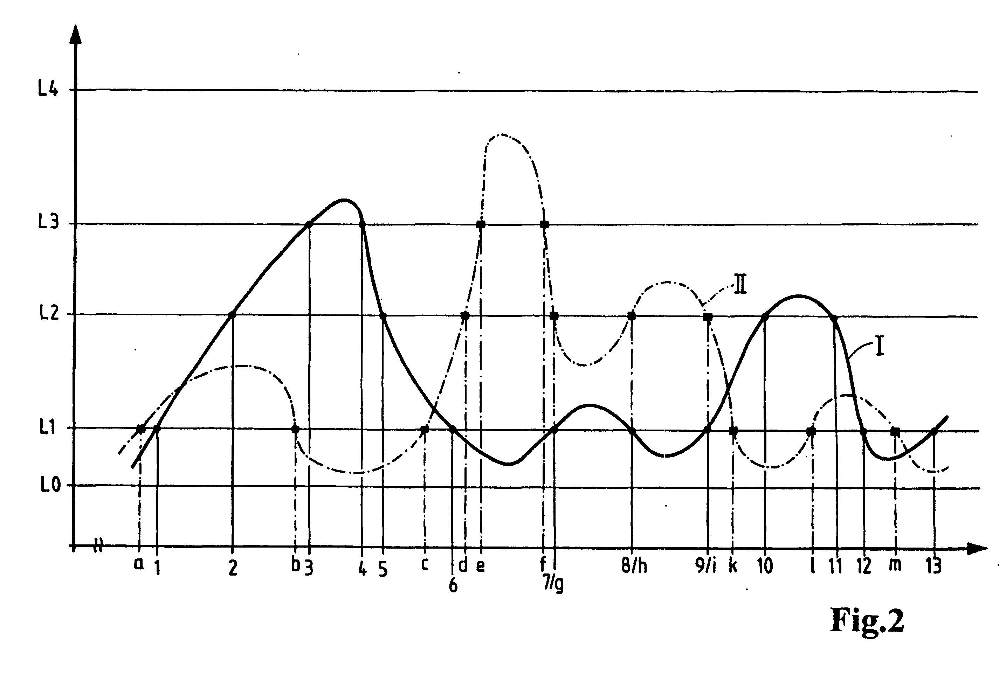

In Figur 2 sind zwei unterschiedliche Kurven I und II dargestellt, welche den Verlauf von zwei Flüssigkeitspegel in dem Rückförderbehälter 10 gemäß Figur 1 darstellen. Auf der Abszisse ist der zeitliche Ablauf und auf der Ordinate der Flüssigkeitspegel abgetragen. L0 stellt den minimalen Füllstand dar, welcher im Normalbetrieb nicht erreicht werden darf. L1 bezeichnet das Flüssigkeitsniveau, ab welchem eine Rückförderpumpe betrieben wird. Bei Überschreiten von L2 sind zwei Rückförderpumpen zu betreiben. Bei L3 müssen drei Rückförderpumpen arbeiten.

In der ersten Kurve I werden die Schaltpunkte mit Ziffern von 1 bis 13 bezeichnet. Beim Überschreiten oder Unterschreiten eines Sensors L0 bis L4 erfolgt eine Änderung in der Schaltung der drei Rückförderpumpen 19 gemäß Figur 1. Die Schaltfolge für drei Rückförderpumpen R1, R2 und R3 wird nachfolgend in einer Tabelle beschrieben. Hierbei bedeutet "einschalten", dass die jeweilige Rückförderpumpe beim Überschreiten eines Sensors eingeschaltet wird, "an" bedeutet, dass die bereits eingeschaltete Rückförder pumpe weiter läuft und "ausschalten" bedeutet, dass die betreffende Rückförderpumpe beim Unterschreiten eines Sensors ausgeschaltet wird. Der jeweilige Zustand der Rückförderpumpen wird beim Erreichen des jeweiligen Sensors eingeleitet. Bei einem ansteigenden Flüssigkeitspegel wird beim Überschreiten des Sensors eine Rückförderpumpe eingeschaltet. Bei einem absinkenden Flüssigkeitspegel wird beim Unterschreiten des Sensors eine Rückförderpumpe abgeschaltet.

| Schaltpunkt | R1 | R2 | R3 |
|---|---|---|---|
| 1 | einschalten | - | - |
| 2 | an | einschalten | - |
| 3 | an | an | einschalten |
| 4 | ausschalten | an | an |
| 5 | - | ausschalten | an |
| 6 | - | - | ausschalten |
| 7 | einschalten | - | - |
| 8 | ausschalten | - | - |
| 9 | - | einschalten | - |
| 10 | - | an | einschalten |
| 11 | - | ausschalten | an |
| 12 | - | - | ausschalten |
| 13 | einschalten | - | - |

Beim Einschalten einer Rückförderpumpe wird immer die am längsten abgeschaltete Rückförderpumpe von der Elektronik ausgewählt und eingeschaltet. Beim Abschalten einer Rückförderpumpe wird immer die am längsten laufende Rückförderpumpe von der Elektronik ausgewählt und abgeschaltet. Somit kann die Einschaltfrequenz der einzelnen Rückförderpumpen reduziert werden.

Wenn der Verlauf des Flüssigkeitspegels mit fünf Sensoren L0 bis L4 und vier Rückförderpumpen realisiert werden soll, so würde sich die nachfolgende Schaltfolge ergeben.

| Schaltpunkt | R1 | R2 | R3 | R4 |
|---|---|---|---|---|
| 1 | einschalten | - | - | - |
| 2 | an | einschalten | - | - |
| 3 | an | an | einschalten | - |
| 4 | ausschalten | an | an | - |
| 5 | - | ausschalten | an | - |
| 6 | - | - | ausschalten | - |
| 7 | - | - | - | einschalten |
| 8 | - | - | - | ausschalten |
| 9 | einschalten | - | - | - |
| 10 | an | einschalten | - | - |
| 11 | ausschalten | an | - | - |
| 12 | - | ausschalten | - | - |
| 13 | - | - | einschalten | - |

Bei dem Kurvenverlauf II mit den Sensoren L0 bis L4 und drei Rückförderpumpen R1 bis R3 ergibt sich die nachfolgende Schaltfolge. Die Schaltpunkte sind bei diesem Kurvenverlauf mit Kleinbuchstaben a bis m gekennzeichnet:

| Schaltpunkt | R1 | R2 | R3 |
|---|---|---|---|
| a | einschalten | - | - |
| b | ausschalten | - | - |
| c | - | einschalten | - |
| d | - | an | einschalten |
| e | einschalten | an | an |
| f | an | ausschalten | an |
| g | an | - | ausschalten |
| h | an | einschalten | - |
| i | ausschalten | an | - |
| k | - | ausschalten | - |
| l | - | - | einschalten |
| m | - | - | ausschalten |

Wenn der Kurvenverlauf der Kurve II mit vier Rückförderpumpen R1 bis R4 realisiert wird, so ergibt sich die folgende Schaltabfolge.

| Schaltpunkt | R1 | R2 | R3 | R4 |
|---|---|---|---|---|
| a | einschalten | - | - | - |
| b | ausschalten | - | - | - |
| c | - | einschalten | - | - |
| d | - | an | einschalten | - |
| e | - | an | an | einschalten |
| f | - | ausschalten | an | an |
| g | - | - | ausschalten | an |
| h | einschalten | - | - | an |
| i | an | - | - | ausschalten |
| k | ausschalten | - | - | - |
| l | - | einschalten | - | - |
| m | - | ausschalten | - | - |

Selbstverständlich ist eine Verknüpfung einer Anzahl von mehreren oder wenigeren Sensoren mit einer Anzahl von mehreren oder wenigeren Rückförderpumpen nach der beschriebenen Logik durchführbar.

## Patentansprüche

1. Vorrichtung zur Rückförderung von flüssigen Medien, insbesondere Kühlschmiermittel, aufweisend einen Rückförderbehälter (10), eine Zuleitung (11) und einem Sammler (21),
- wobei in dem Rückförderbehälter (10) Mittel zur Erfassung eines Flüssigkeitspegels vorgesehen sind,
- wobei die Zuleitung (11) einerseits mit einer Flüssigkeitsquelle und andererseits mit dem Rückförderbehälter (10) verbunden ist,
- wobei mindestens zwei parallel zueinander verlaufende Ableitungen (17) vorgesehen sind, welche einerseits korrespondierend mit dem Rückförderbehälter (10) und andererseits mit dem Sammler (21) verbunden sind und in jeder Ableitung (17) eine Rückförderpumpe (19) angeordnet ist,
**dadurch gekennzeichnet, dass**
- mindestens drei Mittel zur Erfassung des Flüssigkeitspegels in dem Rückförderbehälter (10) angeordnet sind, wobei durch das erste Mittel zur Erfassung des Flüssigkeitspegels ein Mindeststand, durch das dritte Mittel zur Erfassung des Flüssigkeitspegels ein Maximalstand und durch das zweite Mittel zur Erfassung des Flüssigkeitspegels ein Mittelstand, welcher zwischen dem Mindeststand und dem Maximalstand angeordnet ist, erfassbar ist,
- sowohl die Mittel zur Erfassung des Flüssigkeitspegels, als auch die Rückförderpumpe (19) mit einer Elektronik (24) korrespondierend verbunden sind und
- in der Elektronik eine Logik zur Steuerung der Rückförderpumpen (19) gespeichert ist, durch welche die Einschaltfrequenz der Rückförderpumpen(19) reduzierbar ist,
- wobei die erste Rückförderpumpe (19) einschaltbar ist, wenn der Flüssigkeitspegel den Mindeststand überschritten hat,
- wobei bei einem ansteigenden Flüssigkeitspegel, über einen weiteren Messpunkt eine weitere Rückförderpumpe (19) hinzuschaltbar ist, wobei diese hinzugeschaltete Rückförderpumpe (19) die am längsten abgeschaltete Rückförderpumpe (19) ist, und
- wobei bei einem absinkenden Flüssigkeitspegel unter einen der Messpunkte eine Rückförderpumpe (19) abschaltbar ist, wobei die abgeschaltete Rückförderpumpe (19) die am längsten laufende Rückförderpumpe (19) ist.

2. Vorrichtung zur Rückförderung von flüssigen Medien nach Anspruch 1, **dadurch gekennzeichnet, dass** druckseitig der Rückförderpumpen (19) einen automatisch gesteuerten Kugelhahn angeordnet ist.

3. Vorrichtung zur Rückförderung von flüssigen Medien nach einem der vorangehenden Ansprüche, **dadurch gekennzeichnet, dass** der Rückförderbehälter (10) druckfest ausgebildet ist.

4. Vorrichtung zur Rückförderung von flüssigen Medien nach Anspruch 3, **dadurch gekennzeichnet, dass** eine Absaugvorrichtung (13) in dem oberen Bereich des Rückförderbehälters (10) angeordnet ist.

5. Vorrichtung zur Rückförderung von flüssigen Medien nach einem der vorangehenden Ansprüche, **dadurch gekennzeichnet, dass** die Zuleitung (11) mit dem Rückförderbehälter (10) in einem oberen Bereich verbunden ist.

6. Vorrichtung zur Rückförderung von flüssigen Medien, nach einem der vorangehenden Ansprüche, **dadurch gekennzeichnet, dass** ein weiteres Mittel zur Erfassung des Flüssigkeitspegels im oberen Bereich des Rückförderbehälters (10) angeordnet ist, durch welches ein maximaler Füllstand erfassbar ist.

7. Vorrichtung zur Rückförderung von flüssigen Medien, nach einem der vorangehenden Ansprüche, **dadurch gekennzeichnet, dass** ein weiteres Mittel zur Erfassung des Flüssigkeitspegels im unteren Bereich des Rückförderbehälters (10) angeordnet ist, durch welches ein minimaler Füllstand erfassbar ist.

8. Verfahren zum Betreiben einer Vorrichtung zur Rückförderung von flüssigen Medien nach einem der vorangehenden Ansprüche, **dadurch gekennzeichnet, dass**
- die Rückförderpumpen (19) durch die Elektronik (24) mit einer minimalen Einschaltfrequenz betrieben werden,
- wobei eine erste Rückförderpumpe (19) eingeschaltet wird, wenn der Flüssigkeitspegel den Mindeststand überschritten hat,
- wobei bei einem ansteigenden Flüssigkeitspegel, über einen weiteren Messpunkt eine weitere Rückförderpumpe (19) hinzugeschaltet wird, wobei diese hinzugeschaltete Rückförderpumpe (19) die am längsten abgeschaltete Rückförderpumpe (19) ist, und
- wobei bei einem absinkenden Flüssigkeitspegel unter einen der Messpunkte eine Rückförderpumpe (19) abgeschaltet wird, wobei die abgeschaltete Rückförderpumpe (19) die am längsten laufende Rückförderpumpe (19) ist.

9. Verfahren zum Betreiben einer Vorrichtung zur Rückförderung von flüssigen Medien nach Anspruch 9, **dadurch gekennzeichnet, dass** beim Überschreiten des maximalen Füllstandes die Flüssigkeitszufuhr in den Rückförderbehälter unterbrochen wird und ein Alarmsignal ausgesendet wird.

10. Verfahren zum Betreiben einer Vorrichtung zur Rückförderung von flüssigen Medien nach einem der Ansprüche 8 oder 9, **dadurch gekennzeichnet, dass** beim Unterschreiten des minimalen Füllstandes alle Rückförderpumpen (19) abgeschaltet werden und ein Alarmsignal ausgesendet wird.

## Claims

1. Apparatus for recirculating liquid media, more especially cooling lubricant, having a return feed container (10), a supply line (11) and a collecting means (21),
- means being provided in the return feed container (10) for detecting a liquid level,
- the supply line (11) being connected at one end to a liquid source and at the other end to the return feed container (10),
- at least two discharge lines (17) extending parallel to each other being provided, which discharge lines are connected at one end in a corresponding manner to the return feed container (10) and at the other end to the collecting means (21), and a return pump (19) being disposed in each discharge line (17),
**characterised in that**
- at least three means for detecting the liquid level are disposed in the return feed container (10), a minimum level being detectable by means of the first means for detecting the liquid level, a maximum level being detectable by means of the third means for detecting the liquid level and a mean level, which is disposed between the minimum level and the maximum level, being detectable by means of the second means for detecting the liquid level,
- both the means for detecting the liquid level and the return pump (19) are connected in a corresponding manner to an electronic device (24) and
- a logic means for controlling the return pumps (19) is stored in the electronic device, via which logic means the actuation frequency of the return pumps (19) is reducible,
- the first return pump (19) being actuatable when the liquid level has exceeded the minimum level,
- when the liquid level increases above another measured point, another return pump (19) being connectable in addition thereto, this pump (19) connected in addition thereto being the return pump (19) which has been disconnected the longest, and
- where the liquid level decreases below one of the measured points, a return pump (19) being disconnectable, the pump (19) disconnected being the return pump (19) which has been running the longest.

2. Apparatus for recirculating liquid media according to claim 1, **characterised in that** an automatically controlled ball valve is disposed on the pressure side of the return pumps (19).

3. Apparatus for recirculating liquid media according to one of the preceding claims, **characterised in that** the return feed container (10) is resistant to compression.

4. Apparatus for recirculating liquid media according to claim 3, **characterised in that** a suction apparatus (13) is disposed in the upper region of the return feed container (10).

5. Apparatus for recirculating liquid media according to one of the preceding claims, **characterised in that** the supply line (11) is connected to the return feed container (10) in an upper region.

6. Apparatus for recirculating liquid media according to one of the preceding claims, **characterised in that** a further means for detecting the liquid level is disposed in the upper region of the return feed container (10), via which further means a maximum filling level is detectable.

7. Apparatus for recirculating liquid media according to one of the preceding claims, **characterised in that** a further means for detecting the liquid level is disposed in the lower region of the return feed container (10), via which further means a minimum filling level is detectable.

8. Method for operating an apparatus for recirculating liquid media according to one of the preceding claims, **characterised in that**
- the return pumps (19) are operated by means of the electronic device (24) with a minimum actuating frequency,
- a first return pump (19) being actuated when the liquid level has exceeded the minimum level,
- where a liquid level increases above another measured point another return pump (19) being connected in addition thereto, this return pump (19) connected in addition thereto being the return pump (19) which has been disconnected the longest, and
- where a liquid level decreases below one of the measured points, a return pump (19) being disconnected, the disconnected return pump (19) being the return pump (19) which has been running the longest.

9. Method for operating an apparatus for recirculating liquid media according to claim 9, **characterised in that** when the maximum filling level is exceeded, the liquid supply into the return feed container is interrupted and an alarm signal is transmitted.

10. Method for operating an apparatus for recirculating liquid media according to one of claims 8 or 9, **characterised in that** when the minimum filling level is fallen below, all return pumps (19) are disconnected and an alarm signal is transmitted.

## Revendications

1. Dispositif pour la recirculation de liquides, en particulier de lubrifiant réfrigérant, comportant un récipient de refoulement (10), une conduite d'amenée (11) et un collecteur (21), dans lequel
- des moyens permettant de déterminer un niveau de liquide sont prévus dans le récipient de refoulement (10),
- la conduite d'amenée (11) est reliée d'une part à une source de liquide et d'autre part au récipient de refoulement (10),
- au moins deux dérivations (17) parallèles l'une à l'autre sont reliées d'une part à un récipient de refoulement (10) de manière correspondante et d'autre part au collecteur (21), avec une pompe de refoulement (19) placée dans chaque dérivation (17),
**caractérisé en ce que**
- au moins trois moyens pour déterminer le niveau de liquide sont disposés dans le récipient de refoulement (10), dont le premier moyen détermine un niveau minimum de liquide, le troisième moyen détermine un niveau maximum de liquide, et le deuxième moyen détermine un niveau moyen compris entre le niveau minimum et le niveau maximum,
- les moyens pour déterminer le niveau de liquide, tout comme la pompe de refoulement (19), sont reliés de manière correspondante à un système électronique (24),
- un système logique de commande des pompes de refoulement (19) permettant de réduire la fréquence de fermeture des pompes de refoulement (19) est enregistré dans le système électronique,
- la première pompe de refoulement (19) peut être activée lorsque le niveau de liquide a dépassé le niveau minimum,
- une autre pompe de refoulement (19) peut être activée en complément dans le cas d'un niveau de liquide en augmentation allant au-delà d'un autre point de contrôle, cette pompe de refoulement (19) activée en complément étant celle qui est désactivée depuis le plus longtemps, et
- une pompe de refoulement (19) est désactivée dans le cas d'un niveau de liquide en baisse inférieur à l'un des points de contrôle, la pompe de refoulement désactivée (19) étant celle qui fonctionne depuis le plus longtemps.

2. Dispositif pour la recirculation de liquides selon la revendication 1,
**caractérisé en ce qu'**
un robinet à tournant sphérique à commande automatique est disposé du côté refoulement des pompes de refoulement (19).

3. Dispositif pour la recirculation de liquides selon l'une quelconque des revendications précédentes,
**caractérisé en ce que**
le récipient de refoulement (10) est construit à l'épreuve de la pression.

4. Dispositif pour la recirculation de liquides selon la revendication 3,
**caractérisé en ce qu'**
un dispositif d'aspiration (13) est disposé dans la zone supérieure du récipient de refoulement (10).

5. Dispositif pour la recirculation de liquides selon l'une quelconque des revendications précédentes,
**caractérisé en ce que**
la conduite d'amenée (11) est reliée au récipient de refoulement (10) dans une zone supérieure.

6. Dispositif pour la recirculation de liquides selon l'une quelconque des revendications précédentes,
**caractérisé en ce qu'**
un autre moyen pour déterminer le niveau de liquide est disposé dans la zone supérieure du récipient de refoulement (10) et permet de déterminer un niveau de remplissage maximum.

7. Dispositif pour la recirculation de liquides selon l'une quelconque des revendications précédentes,
**caractérisé en ce qu'**
un autre moyen pour déterminer le niveau de liquide est placé dans la zone inférieure du récipient de refoulement (10) et permet de déterminer un niveau de remplissage minimum.

8. Procédé de mise en oeuvre d'un dispositif pour la recirculation de liquides selon l'une quelconque des revendications précédentes,
**caractérisé en ce que**
- les pompes de refoulement (19) sont mises en oeuvre par le système électronique (24) à une fréquence d'activation minimum,
- une première pompe de refoulement (19) est activée lorsque le niveau de liquide a dépassé le niveau minimum,
- une autre pompe de refoulement (19) peut être activée en complément dans le cas d'un niveau de liquide en augmentation allant au-delà d'un autre point de contrôle, cette pompe de refoulement (19) activée en complément étant celle qui est désactivée depuis le plus longtemps et
- une pompe de refoulement (19) peut être désactivée dans le cas d'un niveau de liquide en baisse inférieur à l'un des points de contrôle, la pompe de refoulement désactivée (19) étant celle qui fonctionne depuis le plus longtemps.

9. Procédé de mise en oeuvre d'un dispositif de refoulement pour liquides selon la revendication 8,
**caractérisé en ce que**
l'arrivée de liquide dans le récipient de refoulement est interrompue si le niveau de remplissage maximum est dépassé et un signal d'alarme est envoyé.

10. Procédé de mise en oeuvre d'un dispositif de refoulement pour liquides selon l'une des revendications 8 ou 9,
**caractérisé en ce que**
toutes les pompes de refoulement (19) sont désactivées lorsque le niveau de remplissage est inférieur au niveau minimum et un signal d'alarme est envoyé.
